# EUROPÄISCHE PATENTSCHRIFT

(11) **EP 3 575 662 B1**
(45) Veröffentlichungstag und Bekanntmachung des Hinweises auf die Patenterteilung: **29.09.2021**
(21) Anmeldenummer: 18174699.1
(22) Anmeldetag: 29.05.2018
(51) Int. Cl.: F16L 47/00, F16L 47/03, B29C 65/34, F16L 3/11, B29C 65/00, B29L 23/00

(54) **ELEKTROSCHWEISSBAND**
ELECTRIC WELDING STRIP
BANDE DE SOUDAGE ÉLECTRIQUE

(43) Veröffentlichungstag der Anmeldung: 04.12.2019
(60) Teilanmeldung: 21156761.5
(73) Patentinhaber: Georg Fischer Rohrleitungssysteme AG, 8201 Schaffhausen (CH)
(72) Erfinder: Brunner, Andreas, 8463 Benken (CH)
(74) Vertreter: Fenner, Seraina

(56) Entgegenhaltungen:
- BE-A3- 1 005 527
- US-A- 4 378 323
- US-A- 5 286 952

## Beschreibung

Die Erfindung betrifft ein Elektroschweissband zum Verschweissen mit Kunststoffrohrleitungen insbesondere zur Anwendung bei einer Fixpunktbefestigung bestehend aus einem Mantelelement vorzugsweise aus einem elektrisch isolierenden Kunststoff, mindestens einem Heizelement aus elektrisch leitendem Kunststoff und mindestens zwei Kontaktelementen um dem Heizelement elektrische Energie zuzuführen.

Solche Elektroschweissbänder werden im Stand der Technik beispielsweise verwendet um Rohrschellen auf einer Rohrleitung gegen Verschiebung in den Achsrichtungen zu fixieren. Meist werden dazu Fixpunktbefestigungen oder Fixpunkte verwendet und sind beim Verlegen bzw. Befestigen von Rohrleitungssystemen allgemein bekannt. Mit solchen Fixpunktbefestigungen werden Bewegungen in Axialrichtung in Kunststoffleitungen kontrolliert oder verhindert. Die Fixpunktbefestigungen unterteilen die Kunststoffleitungen in kleine Abschnitte welche eine eingeschränkte Bewegungsfreiheit aufweisen. Die Fixpunktbefestigungen müssen hierbei die Kräfte der Längenausdehnung der Kunststoffleitungen, das Gewicht des durchfliessenden Mediums und auch das Gewicht der Kunststoffrohre sowie jegliche Art von Krafteinwirkung durch Betrieb und Unterhalt aufnehmen. Nach dem Stand der Technik besteht eine Fixpunktbefestigung aus einer Fixpunktrohrschelle, die das Rohr selbst oder ein auf dem Rohr aufgebrachte Installation direkt umgreift und die im Abstand zu einer Gebäudewand an dieser mittels einer Grundplatte befestigt ist. Beidseitig neben der Rohrschelle befinden sich zur Vermeidung axialer Verschiebungen Begrenzungen, wobei diese Begrenzungen meist als Schweissmuffen oder auch Formteile ausgebildet sind. Die US 5 286 952 offenbart Artikel, die ein dünnes laminares Heizelement enthalten, das aus einem gesinterten leitfähigen Polymer besteht, und Elektroden, die am Heizelement angebracht sind, sodass Strom in der Ebene des Elements fließt.

Die EP 0 430 866 A2 sowie EP 0 414 641 A1 offenbaren ein Verbindungsstück, welches mit einem Kunststoffrohr verschweisst wird und das anschliessend von einer Rohrschelle einer Fixpunktbefestigung umgeben wird. Die axiale Begrenzung wird direkt mit einem Schweissband gelöst indem daran seitliche Wülste angeordnet sind, wobei das Elektroschweissband zu dessen Erwärmung einen Schweissdraht verwendet.

Nachteilig hierbei ist, dass insbesondere bei grossen Rohrdimensionen mit entsprechend grossem Rohrumfang die für die Schweissung benötigte elektrische Spannung stark zunimmt, was der Arbeitssicherheit nicht dienlich ist. Alternativ werden die Schweisszeiten bei niedriger Spannung stark verlängert, was für den Installateur Mehrkosten verursacht. Zudem muss aufgrund der Kontaktstellen für die Stromzuführung jede Rohrdimension ein separates, auf den Rohrdurchmesser abgestimmtes, Verbindungsstück aufweisen, wodurch hohe Produktions- und Lagerkosten entstehen. Überdies benötigt der Aufbau spezielle nicht handelsübliche Rohrschellen mit angepasstem Durchmesser was wiederum eine Teilegeometrie verursacht, welche dem Produkt eine unnötig hohe Biegesteifigkeit verleiht. Desweitern erfolgt durch die Aufheizung mittels Heizelement (Draht) keine homogene Erwärmung des Schweissbereichs.

Es ist Aufgabe der Erfindung ein Elektroschweissband und ein damit verbundenes Herstellverfahren vorzuschlagen, welches einen universellen Einsatz ermöglicht und somit für alle Rohrdurchmesser anwendbar ist sowie eine entsprechende Flexibilität aufweist um eine einfache und passgenaue Montage zu ermöglichen, was wiederum einen wirtschaftlichen Nutzen bringt wie auch ein vereinfachtes Herstellungsverfahren bei welchem auf eine Produktion von durchmesserspezifischen Teilen verzichtet und durchmesserunabhängig produziert werden kann.

Diese Aufgabe wird erfindungsgemäss dadurch gelöst, dass das Mantelelement und das oder die Heizelemente als Bänder ausgebildet sind, wobei das Mantelelement das oder die Heizelemente mindestens teilweise umgibt, wobei die Kontaktelemente in den sich gegenüberliegenden Randbereichen des oder der Heizelemente angeordnet sind und sich parallel zueinander entlang des oder der Heizelemente erstrecken.

Das erfindungsgemässe Elektroschweissband zeichnet sich dadurch aus, dass für eine erfolgreiche Schweissung unabhängig von der Länge des Elektroschweissbandes vergleichsweise niedrige elektrische Spannungen benötigt werden. Damit ergibt sich auch, dass die Schweisszeiten längenunabhängig sind und auch für grosse Rohrdimensionen vergleichsweise kurz bleiben.

Zudem wird eine homogene Erwärmung des Heizelements gewährleistet, die die Schweisszone homogen aufschmilzt und dadurch die Schweisszeiten reduziert.

Das erfindungsgemässe Elektroschweissband zum Verschweissen mit Kunststoffrohrleitungen insbesondere zur Anwendung bei einer Fixpunktbefestigung beinhaltet ein Mantelelement aus vorzugsweise einem elektrisch isolierenden Kunststoff. Des Weiteren weist das erfindungsgemässe Elektroschweissband mindestens ein Heizelement auf, welches aus einem elektrisch leitenden Kunststoff hergestellt ist. Um dem Heizelement die Energie zuzuführen weist das Elektroschweissband mindestens zwei Kontaktelemente auf. Das Mantelelement sowie das Heizelement sind als Bänder ausgebildet vorzugsweise als endlos herstellbare Bänder. Das Mantelelement umgibt zumindest teilweise das Heizelement bzw. das Heizelement ist vorzugsweise vom Mantelelement derart umschlossen, dass es seitlich sowie oben und unten formschlüssig geführt ist und nur eine Verschiebung des Heizelements im Mantelelement in Längsrichtung ermöglicht wird. Die Kontaktelemente sind in den sich gegenüberliegenden Randbereichen des Heizelements angeordnet und erstrecken sich entlang des Heizelements welches als Band ausgebildet ist. Das Heizelement kann aus mehreren vorzugsweise parallel verlaufenden Heizelementen gebildet werden, welche jeweils zwei Kontaktelemente aufweisen oder sich aber auch untereinander ein Kontaktelement teilen können und somit bspw. für zwei Heizelemente, welche vorzugsweise parallel verlaufen, drei Kontaktelemente vorhanden sind. Die Kontaktelemente erstrecken sich parallel zueinander, wobei der Stromfluss zwischen den beiden Kontaktelementen durch das Heizelement, welches aus einem elektrisch leitenden Kunststoff besteht, ermöglicht wird. Dadurch dass das Heizelement ausschliesslich aus elektrisch leitendem Kunststoff besteht und keine Drähte oder Litzen zur Stromflussgewährleistung zwischen den Kontaktelementen bestehen ist das Heizelement flexibel und biegsam in seiner Anwendung.

Vorzugsweise ist die spezifische Leitfähigkeit der Kontaktelemente höher als die spezifische Leitfähigkeit des Heizelements, vorzugsweise um mindestens ein 10-faches speziell bevorzugt um mindestens ein 100-faches höher, dies ermöglicht eine gute Stromzufuhr und begünstigt einen homogenen Energieeintrag über das gesamte Heizelement.

Es hat sich als vorteilhaft gezeigt, wenn das Heizelement aus elektrisch leitendem Kunststoff einen spezifischen elektrischen Widerstand von 0.1 - 100 [Ω x cm], vorzugsweise von 0.1 - 10 [Ω x cm] aufweist, dies ermöglicht eine homogene Erwärmung des Heizelements.

Vorzugsweise sind die Kontaktelemente aus Metall ausgebildet, wobei Kupfer zu bevorzugen ist. Ebenso besteht die Möglichkeit, dass die Kontaktelemente aus Endloskohlefaser oder aus einem elektrisch leitenden Kunststoffcompound mit Kohlenstoffnanoröhrchen, Graphit, Graphene oder mit einem metallischen Füllstoff bestehen. Diese Materialien eignen sich gut zur Stromzufuhr. Neben der hohen elektrischen Leitfähigkeit sind diese Kontaktelemente auch einfach in das Heizelement einzubringen, vorzugsweise werden die Kontaktelemente während des Extrudierprozesses miteingebracht.

Es hat sich als vorteilhaft gezeigt, wenn die Kontaktelemente als Draht oder Drahtgeflecht ausgebildet sind, wobei auch andere Formausgestaltungen möglich sind. Auch verschiedene Querschnittsformen des Kontaktelements, wie zum Beispiel rund, oval, eckig usw. sind geeignet zur Stromzufuhr.

In den dünner ausgebildeten Bereichen des Heizelements erhöht sich die Stromdichte respektive der lokale Spannungsabfall über das Widerstandselement, wodurch das Heizelement in diesen Bereichen wärmer bzw. heisser wird als in den dickeren Bereichen, wobei sich hier die Breite bzw. die Dicke der Bereiche auf die Querschnittsfläche des Heizelements richtet.

Als bevorzugte Ausführungsform sind das Mantelelement und das Heizelement auf der Basis desselben Kunststofftyps hergestellt, vorzugsweise auf der Basis eines thermoplastischen Kunststoffs, speziell bevorzugt ist ein thermoplastisches Polyolefin. Zudem weist sowohl das Mantelelement wie auch das Heizelement vorzugsweise denselben Kunststoff auf bzw. besteht aus derselben Kunststoffbasis wie die Rohre mit dem das Elektroschweissband verschweisst wird.

Es ist vorteilhaft, wenn das Heizelement formschlüssig im Mantelelement angeordnet ist, wobei das Heizelement und das Mantelelement ausschliesslich in Bandlängsrichtung zueinander verschiebbar angeordnet sind. Der Formschluss zwischen dem Mantelelement und dem Heizelement verhindert eine seitliche Verschiebung der Elemente zueinander sowie nach oben und nach unten. Die Verschiebungsmöglichkeit in Längsrichtung des Heizelements und des Mantelelements zueinander gewährleistet eine hohe Flexibilität des Elektroschweissbands und kann somit für alle Rohrdurchmesser eingesetzt werden, da dadurch das Elektroschweissband auch um kleinere Durchmesser angebracht werden kann.

Vorzugsweise weist das Elektroschweissband eine Umgriffsführung auf bzw. ist als eine solche ausgebildet und das Heizelement ist im bzw. vom Mantelelement geführt, wobei das Heizelement zumindest teilweise vom Mantelelement umgriffen ist. Bei der Umgriffsführung wird das Heizelement vom Mantelelement seitlich wie auch von oben und unten umgriffen, so dass keine seitliche Verschiebung wie auch keine Verschiebung nach oben und unten möglich ist. Als Umgriffsführungen sind T-Nutenführungen oder auch Schwalbenschwanzführungen bekannt, wobei auch andere Arten der Umgriffsführung denkbar sind.

Das Mantelelement umgibt das Heizelement zumindest teilweise, wobei selbstverständlich auch ein vollständiges Umgeben des Heizelements durch das Mantelelement vorstellbar ist, so dass der Querschnitt des Heizelements vollständig auch an dessen Unterseite vom Mantelelement umgeben ist, wie auch hier ein Verschieben in Längsrichtung aufgrund der vorzugsweise offenen Stirnseiten gegeben ist im Fall einer separaten Extrusion des Mantel- und Heizelements, wo keine gegenseitige Verschmelzung der Elemente stattfindet. Erfindungsgemäss ist das Heizelement seitlich nicht verschiebbar ietrespektive nicht quer zur Bandlängsrichtung, wobei das Heizelement ausschliesslich in der Bandlängsrichtung im Mantelelement verschiebbar angeordnet ist.

Im Querschnitt des Elektroschweissbands ist die Breite bzw. der Durchmesser eines Kontaktelements kleiner oder gleich der Dicke des Heizelements im Bereich der Kontaktfläche zwischen Kontaktelement und Heizelement ausgebildet. Das heisst, dass im Querschnitt des Elektroschweissbands die Breite bzw. der Durchmesser des Kontaktelements kleiner oder gleich der Dicke des Heizelements ist an der Stelle an der das Heizelement das Kontaktelement tangiert bzw. kontaktiert.

Eine weitere Ausgestaltung der Erfindung besteht darin, dass das Mantelelement und das Heizelement eine Schwalbenschwanzführung oder eine T-Nutenführung aufweisen bzw. als Schwalbenschwanzführung oder T-Nutenführung ausgebildet sind. Dadurch ist das Heizelement seitlich wie auch nach oben und unten formschlüssig im Mantelelement angeordnet und eine Verschiebung des Heiz- und Mantelelements ist nur in Bandlängsrichtung möglich.

Eine bevorzugte Ausführungsform besteht darin, dass das Heizelement Anker zur Verbindung mit dem Mantelelement aufweist. Das heisst, durch solche Anker ist das Heizelement formschlüssig im Mantelelement angeordnet und das Herausfallen wird durch die Anker vermieden. Dadurch, dass das Elektroschweissband genügend grosse Spalten zwischen Anker und Mantelelement aufweist, ist auch hier die Flexibilität des Schweissbands bzw. die Verschiebbarkeit zwischen Heizelement und Mantelelement gegeben, wodurch ein Montieren an unterschiedlichen Rohrdurchmessern gewährleistet ist.

Im verschweissten Zustand mit der Rohrleitung, also nach der Montage des Elektroschweissbands an der Rohrleitung können die Anker mitverschweisst sein oder auch nicht.

Unteranderem findet ein erfindungsgemässes Elektroschweissband Anwendung in einer Fixpunktbefestigung für Rohrleitungen, wobei das Elektroschweissband vorzugsweise als Endlosband hergestellt und individuell ablängbar ist und beispielsweise von einer Rohrschelle der Fixpunktbefestigung umfasst ist. Oder aber auch durch ein blosses Band, Klettband oder eine Metallschelle umfasst wird das dem Befestigen des Elektroschweissbands am Rohraussendurchmesser bis zur durchgeführten Verschweissung dient, wobei das umschliessende Band, Klettband oder Metallschelle üblicherweise am verschweissten Elektroschweissband belassen wird aber die Entfernung des Bands bzw. Klettbands durchaus möglich wäre. In solchen Montagefällen wird eine Fixpunktbefestigung durch eine Bride an der Rohrleitung axial versetzt zum Elektroschweissband bzw. zwischen zwei Elektroschweissbändern angeordnet um einen axialen Anschlag bei einer Rohrverschiebung oder Ausdehnung festzulegen und so eine axiale Verschiebung zu begrenzen oder sogar zu unterbinden. Unter einem Endlosband ist selbstverständlich jedes Band zu verstehen, das nicht auf jeden Durchmesser speziell hergestellt werden muss, sondern mehrere Meter oder auch nur einen Meter am Stück durchmesserunabhängig produziert wird und anschliessend direkt bei Montage des Elektroschweissbands auf die benötigte Länge entsprechend abgetrennt bzw. abgelängt wird.

Vorzugsweise weist das Mantelelement an dessen Aussenfläche eine Dickenabstufung auf, diese dient dem Begrenzen der zulässigen Längsverschiebung der bspw. an einer Decke befestigten Rohrleitung. Beim Befestigen der Rohrschelle einer Fixpunktbefestigung direkt um das Elektroschweissband, welches mit der Rohrleitung verschweisst wurde und das in den Randbereichen eine Erhöhung aufweist, wird die Verschiebungsmöglichkeit der Rohrleitung in Längsrichtung begrenzt. Somit steht die Rohrschelle am höheren Randbereich an und die Rohrleitung kann sich nicht weiter in Längsrichtung verschieben. Als weitere Einsatzmöglichkeit des Elektroschweissbands besteht die Möglichkeit das Elektroschweissband mit einem Band, Klettband oder einer Metallschelle vorzugsweise an der Dickenreduktion des Mantelelements und somit der Durchmesserverjüngung im am Rohr angebrachten Zustand zu umfassen um es an der Rohrleitung zu befestigen und dann zu verschweissen. Nach der Verschweissung kann das Band, Klettband oder die Metallschelle am Elektroschweissband belassen oder auch entfernt werden. Die Fixpunktbefestigung vorzugsweise mittels Bride wird dann axial versetzt zum Elektroschweissband an der Rohrleitung befestigt wodurch die Elektroschweissbänder eine mögliche Rohrverschiebung und Ausdehnung begrenzen, da diese an der axialversetzten Fixpunktbefestigung anstehen.

Diese Aufgabe wird erfindungsgemäss auch dadurch gelöst, dass das Heizelement mit den darin angeordneten Kontaktelementen und das Mantelelement im Extrusionsverfahren hergestellt werden und das Heizelement und das Mantelelement nach dem Extrudieren zusammenmontiert werden.

Ausführungsbeispiele der Erfindung werden anhand der Figuren beschrieben, wobei sich die Erfindung nicht nur auf die Ausführungsbeispiele beschränkt. Es zeigen:
- Fig. 1: einen Querschnitt durch ein erfindungsgemässes Elektroschweissband,
- Fig. 2: einen Querschnitt durch ein erfindungsgemässes Elektroschweissband,
- Fig. 3: einen Querschnitt durch ein erfindungsgemässes Elektroschweissband,
- Fig. 4: eine dreidimensionale Ansicht eines erfindungsgemässen Elektroschweissbands,
- Fig. 5: eine dreidimensionale Ansicht eines erfindungsgemässen Elektroschweissbands,
- Fig. 6: einen Querschnitt durch ein erfindungsgemässes Elektroschweissband, wobei das Kontaktelement einen runden Querschnitt aufweist und
- Fig. 7: einen Querschnitt durch ein erfindungsgemässes Elektroschweissband, wobei das Kontaktelement einen eckigen Querschnitt aufweist,
- Fig. 8: eine Ansicht einer möglichen Fixpunktbefestigung bei der die Fixpunktbefestigung das Elektroschweissband umgibt und
- Fig. 9: eine Ansicht einer möglichen Fixpunktbefestigung bei der die Fixpunktbefestigung axial versetzt angeordnet ist.

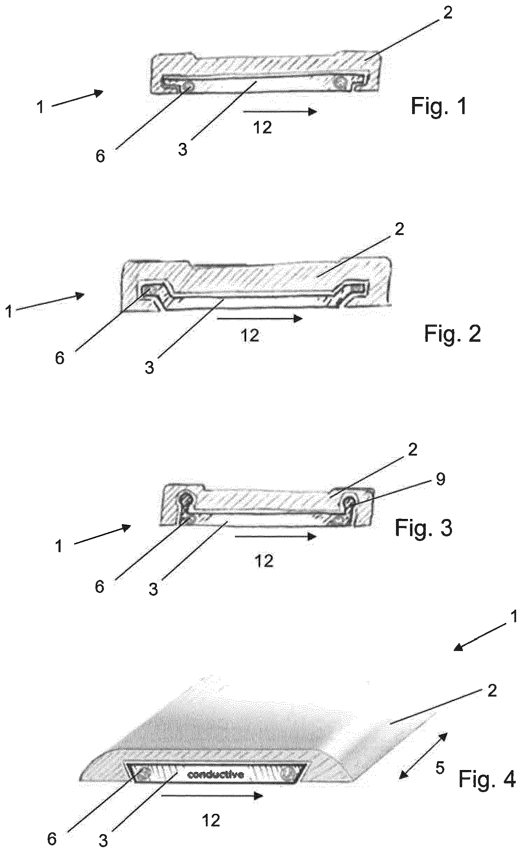

Die Fig.1 - 3 zeigen Querschnitte eines erfindungsgemässen Elektroschweissbands 1 mit jeweils unterschiedlichen Formen der Verbindungsausgestaltung bzw. der Umgriffsführung welche dazu dient, dass das Heizelement 3 im Mantelelement 2 seitlich sowie oben und unten geführt ist und sich nicht ohne weiteres bzw. selbstständig vom Mantelelement 2 lösen kann. Fig. 1 zeigt eine Umgriffsführung, welche als T-Nutenführung ausgebildet ist. Diese ermöglicht das Verschieben des Heizelements 3 im Mantelelement 2 entlang der Bandlänge 5 aber unterbindet eine Verschiebung seitlich wie auch nach oben und unten zueinander sowie das selbstständige voneinander Trennen der beiden Elemente 2, 3. Die Möglichkeit des Verschiebens der Elemente 2, 3 in Bandlänge 5 zueinander gewährt ein Umlegen des Schweissbands 1 um jede Durchmessergrösse der Rohrleitung da durch die Verschiebung zueinander das Schweissband 1 flexibel bzw. biegbarer in der Anwendung ist. Fig. 2 zeigt ebenfalls eine Umgriffsführung wie auch die weiteren Figuren unterschiedliche Ausgestaltungsmöglichkeiten solcher Führungen aufzeigen, wobei es selbstverständlich noch weitere Ausgestaltungsmöglichkeiten gibt.

In den aufgezeigten Querschnitten umschliesst das Mantelelement 2 das Heizelement 3 zumindest teilweise. Selbstverständlich ist auch ein vollständiges Umschliessen denkbar, wobei dann vorzugsweise das Mantelelement 2 an der Unterseite des Heizelements 3 dünn ausgebildet ist um die entstehende Wärme im Heizelement 3 durch Wärmeleitung schnell durchs Mantelmaterial auf das Rohr zu übertragen und damit zu verschmelzen.

Das Heizelement 3 weist dazu einen leitendenden Kunststoff auf der den Stromfluss von einem Kontaktelement 6 zum anderen ermöglicht, wodurch die Erwärmung stattfindet sowie An- und Verschmelzen der Kunststoffe des Heizelements 3, des Mantelelements 2 und des Rohres auf dem das Schweissband 1 befestigt ist.

Da der Stromfluss ausschliesslich durch den leitenden Kunststoff und ohne zusätzliche Drähte oder Litzen bis auf die Kontaktelement 6 erreicht wird, wird das Heizelement 3 in seiner Flexibilität nicht beeinträchtigt was ebenfalls der durchmesserunabhängigen Anwendung zugutekommt und so bei allen Durchmessern befestigbar ist.

Die Kontaktelemente 6 sind im Randbereich 4 des Heizelements 3 angeordnet und dienen der Energiezuführung zum Heizelement 3.

Als weitere alternative Ausgestaltungsmöglichkeit zeigt Fig. 3 Anker 9 die das Ineinandergreifen des Heizelements 3 und des Mantelelements 2 gewährleisten. Wie auch bei den anderen möglichen Verbindungsarten besteht auch hier die Möglichkeit der Verschiebung zueinander in Bandlängsrichtung 5 indem ein grosszügiger Spalt zwischen Anker 9 und der aufnehmenden Kontur im Mantelelement 2 vorhanden ist, was wie bereits erwähnt die hohe Flexibilität des Bandes 1 gewährleistet.

Fig. 4 zeigt eine Schwalbenschwanzführung wie auch dass unterschiedliche Ausgestaltungsformen der äusseren Fläche des Mantelelements 2 vorliegen können. Das heisst, beispielsweise kann die äussere Fläche in der Mitte leicht vertieft gegenüber den Randbereichen sein, welche dann als Anschlag dienen können um eine axiale Verschiebung zu begrenzen oder als definierter Bereich zur Aufnahme eines Bands oder Klettbands, welches der Montage des Elektroschweissbands 1 vor der Verschweissung am Rohr dient. Selbstverständlich sind auch gerade Flächen oder andere Konturen der äusseren Fläche des Mantelelements 2 denkbar. Das Schweissband 1 ist vorzugsweise durch extrudieren hergestellt.

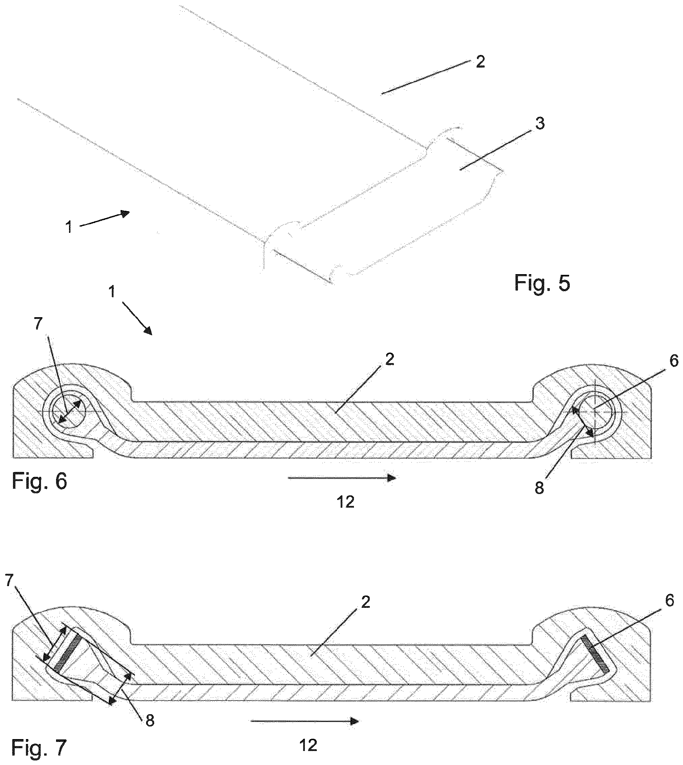

Das Kontaktelement 6 bzw. die Kontaktelemente 6 werden ebenfalls während des Extrudierens eingebracht. Fig. 5 zeigt eine dreidimensionale Ansicht eines erfindungsgemässen Schweissbands 1, wobei das Heizelement 3 zur Ansicht leicht aus dem Mantelelement 2 herausragt. Das Mantelelement 2 sowie das Heizelement 3 sind auf derselben Kunststoffbasis hergestellt, vorzugsweise aus einem thermoplastischen Kunststoff, speziell bevorzugt aus einem thermoplastischen Polyolefin.
Zudem ist es vorteilhaft, wenn auch das Rohr, an welchem das Schweissband 1 verschweisst wird, dieselbe Kunststoffbasis aufweist.
Als vorteilhaft hat sich ebenfalls gezeigt, wenn die Breite bzw. der Durchmesser des Kontaktelements 7, im Querschnitt, kleiner oder gleich der Dicke 8 des Heizelements 3 ist, was aus der Fig. 6 zu entnehmen ist. Je kleiner bzw. dünner ein Bereich am Heizelement 3 ausgestaltet ist desto höher ist dort der Leistungsverbrauch und es wird mehr Wärme erzeugt. Um an dieser Stelle beim Übergang vom Kontaktelement 6 zum Heizelement 3 zu gewährleisten, dass der Stromfluss 12 gegeben ist bzw. das Heizelement 3 am Übergang nicht überhitzt bzw. durchschmilzt ist wie zuvor erwähnt das Heizelement 3 bzw. dessen Dicke 8 breiter oder gleich der Breite des Kontaktelements 6 ausgebildet.

Durch eine Variation der Breite des Heizelementquerschnitts entlang der Stromflussrichtung 12 wird die Wärmeerzeugung in den entsprechenden Bereichen beeinflusst und dadurch die Temperatur in den entsprechenden Bereichen geregelt bzw. beeinflusst. An Stellen mit einem grossen bzw. breiten Heizelementquerschnitt wird weniger Leistung gebraucht, wodurch weniger Wärme erzeugt wird und der Kunststoff entsprechend weniger stark aufgeschmolzen oder mit einer grösseren Verzögerung aufgeschmolzen. Während Bereiche der Heizelemente 3 mit einem kleineren bzw. dünneren Querschnitt viel Wärmeenergie erzeugen und dort der Kunststoff stark bzw. rasch aufgeschmolzen wird.
Dadurch können z. B. Randbereiche 4 oder andere Bereiche bei denen ein Aufschmelzen unerwünscht oder nur gering oder verzögert erfolgen soll entsprechend breit ausgebildet werden.

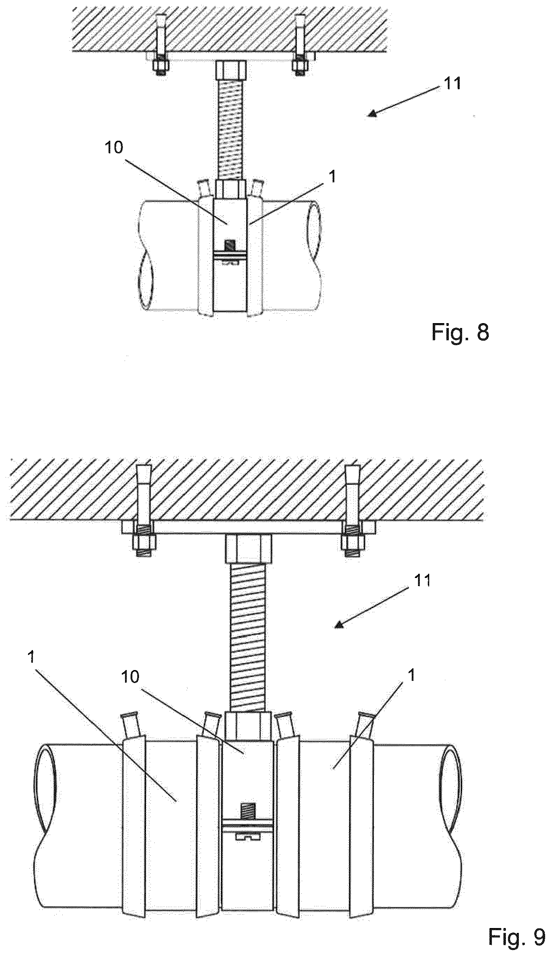

Fig. 8 zeigt eine bevorzugte Anwendung eines erfindungsgemässen Elektroschweissbands 1 als Bestandteil einer Fixpunktbefestigung 11. Die abgebildete Ausführungsform zeigt eine Rohrschelle 10, welche um das Elektroschweissband 1 gelegt ist. Durch die Ausgestaltung des Mantelelements 2 des Elektroschweissbands 1, welches in den Randbereichen eine Verdickung aufweist, ist die Verschiebung in Achsrichtung der Rohrleitung begrenzt. Alternativ ist auch eine Fixpunktbefestigung denkbar, die zwischen zwei an der Rohrleitung angeschweissten Elektroschweissbändern 1, welche als Begrenzungsanschläge dienen, befestigt ist wie in Fig. 9 dargestellt.

### Bezugszeichenliste

- 1: Elektroschweissband
- 2: Mantelelement
- 3: Heizelement
- 4: Randbereich Heizelement
- 5: Bandlängsrichtung
- 6: Kontaktelement
- 7: Breite Kontaktelement / Durchmesser Kontaktelement
- 8: Dicke Heizelement am Übergangsbereich
- 9: Anker
- 10: Rohrschelle
- 11: Fixpunktbefestigung
- 12: Stromfluss

## Patentansprüche

1. Elektroschweissband (1) zum Verschweissen mit Kunststoffrohrleitungen insbesondere zur Anwendung bei einer Fixpunktbefestigung, bestehend aus einem Mantelelement (2) vorzugsweise aus einem elektrisch isolierenden Kunststoff, mindestens einem Heizelement (3) aus elektrisch leitendem Kunststoff und mindestens zwei Kontaktelementen (6) um dem Heizelement (3) elektrische Energie zuzuführen, wobei das Mantelelement (2) und das Heizelement (3) als Bänder ausgebildet sind, wobei das Mantelelement (2) das Heizelement (3) mindestens teilweise umgibt, wobei die Kontaktelemente (6) in den sich gegenüberliegenden Randbereichen (4) des Heizelements (3) angeordnet sind und sich parallel zueinander entlang des Heizelements (3) erstrecken, **dadurch gekennzeichnet, dass** das Heizelement (3) seitlich nicht verschiebbar ist respektive nicht quer zur Bandlängsrichtung, wobei das Heizelement (3) ausschliesslich in der Bandlängsrichtung (5) im Mantelelement (2) verschiebbar angeordnet ist.

2. Elektroschweissband (1) nach Anspruch 1, **dadurch gekennzeichnet, dass** die spezifische Leitfähigkeit der Kontaktelemente (6) höher ist als die spezifische Leitfähigkeit des Heizelements (3), vorzugsweise um ein 10-faches speziell bevorzugt um ein 100-faches höher.

3. Elektroschweissband (1) nach Anspruch 1, **dadurch gekennzeichnet, dass** das Heizelement (3) aus elektrisch leitendem Kunststoff einen spezifische elektrische Widerstand von 0.1 - 100 [Ω x cm], vorzugsweise von 0.1 - 10 [Ω x cm] aufweist.

4. Elektroschweissband (1) nach Anspruch 1 oder 2, **dadurch gekennzeichnet, dass** die Kontaktelemente (6) aus Metall ausgebildet sind, vorzugsweise aus Kupfer.

5. Elektroschweissband (1) nach Anspruch 1 oder 2, **dadurch gekennzeichnet, dass** die Kontaktelemente (6) aus Endloskohlefaser oder aus einem elektrisch leitenden Kunststoffcompound mit Kohlenstoffnanoröhrchen, Graphit, Graphen oder mit einem metallischen Füllstoff ausgebildet sind.

6. Elektroschweissband (1) nach einem der vorangehenden Ansprüche, **dadurch gekennzeichnet, dass** die Kontaktelemente (6) als Draht oder Drahtgeflecht ausgebildet sind.

7. Elektroschweissband (1) nach einem der vorangehenden Ansprüche, **dadurch gekennzeichnet, dass** das Mantelelement (2) und das Heizelement (3) auf der Basis desselben Kunststofftyps hergestellt sind, vorzugsweise aus einem thermoplastischen Kunststoff, speziell bevorzugt aus einem thermoplastischen Polyolefin.

8. Elektroschweissband (1) nach einem der vorangehenden Ansprüche, **dadurch gekennzeichnet, dass** das Heizelement (3) formschlüssig im Mantelelement (2) angeordnet ist.

9. Elektroschweissband (1) nach einem der vorangehenden Ansprüche, **dadurch gekennzeichnet, dass** das Elektroschweissband (1) eine Umgriffsführung aufweist bzw. als eine solche ausgebildet ist und das Heizelement (3) vom Mantelelement (2) geführt ist, wobei das Heizelement (3) zumindest teilweise vom Mantelelement (3) umgriffen ist, wobei bei der Umgriffsführung das Heizelement (3) vom Mantelelement (2) seitlich wie auch von oben und unten umgriffen wird.

10. Elektroschweissband (1) nach einem der vorangehenden Ansprüche, **dadurch gekennzeichnet, dass** im Querschnitt des Elektroschweissbands (1) die Breite bzw. der Durchmesser eines Kontaktelements (6) kleiner oder gleich der Dicke (8) des Heizelements (3) im Bereich der Kontaktfläche zwischen Kontaktelement (6) und Heizelements ist.

11. Elektroschweissband (1) nach einem der vorangehenden Ansprüche, **dadurch gekennzeichnet, dass** das Mantelelement (2) und das Heizelement (3) eine Schwalbenschwanz- oder T-Nutenführung aufweist bzw. als Schwalbenschwanz-oder T-Nutenführung ausgebildet ist.

12. Elektroschweissband (1) nach einem der vorangehenden Ansprüche, **dadurch gekennzeichnet, dass** das Heizelement (3) Anker (9) zur Verbindung mit dem Mantelelement (2) aufweist.

13. Verwendung eines Elektroschweissbands (1) nach einem der Ansprüche 1 bis 12 in einer Fixpunktbefestigung (11) für eine Rohrleitung, wobei das Elektroschweissband (1) vorzugsweise als Endlosband hergestellt und individuell ablängbar ist und von einer Rohrschelle (10) der Fixpunktbefestigung (11) umfasst ist oder die Rohrschelle (10) an der Rohrleitung axial versetzt zum Elektroschweissband angeordnet ist und der axialen Begrenzung dient.

14. Verfahren zum Herstellen eines Elektroschweissbands (1) nach einem der Ansprüche 1 bis 12, **dadurch gekennzeichnet, dass** das Heizelement (3) mit den darin angeordneten Kontaktelementen (6) und das Mantelelement (2) separat im Extrusionsverfahren hergestellt werden und das Heizelement (3) und das Mantelelement (2) nach dem Extrudieren zusammenmontiert werden.

## Claims

1. Electrofusion tape (1) for welding together with plastics pipes in particular for use in a fixed-point fastening, consisting of a jacket element (2) preferably of an electrically insulating plastics material, at least one heating element (3) of electrically conductive plastics material and at least two contact elements (6) for supplying electricity to the heating element (3), wherein the jacket element (2) and the heating element (3) take the form of tapes, wherein the jacket element (2) surrounds the heating element (3) at least in part, wherein the contact elements (6) are arranged in the mutually opposing marginal regions (4) of the heating element (3) and extend parallel to one another along the heating element (3), **characterized in that** the heating element (3) is displaceable neither sideways nor transversely to the longitudinal direction of the tape, the heating element (3) being arranged so as to be displaceable in the jacket element (2) solely in the longitudinal direction (5) of the tape.

2. Electrofusion tape (1) according to Claim 1, **characterized in that** the specific conductivity of the contact elements (6) is higher than the specific conductivity of the heating element (3), preferably ten times, especially preferably one hundred times, higher.

3. Electrofusion tape (1) according to Claim 1, **characterized in that** the heating element (3) of electrically conductive plastics material has a specific electrical resistance of 0.1 - 100 [Ω x cm], preferably of 0.1 - 10 [Ω x cm].

4. Electrofusion tape (1) according to Claim 1 or 2, **characterized in that** the contact elements (6) are made of metal, preferably of copper.

5. Electrofusion tape (1) according to Claim 1 or 2, **characterized in that** the contact elements (6) are made of endless carbon fibre or of an electrically conductive plastics compound with carbon nanotubes, graphite, graphene or with a metallic filler.

6. Electrofusion tape (1) according to one of the preceding claims, **characterized in that** the contact elements (6) take the form of wire or wire braid.

7. Electrofusion tape (1) according to one of the preceding claims, **characterized in that** the jacket element (2) and the heating element (3) are manufactured on the basis of the same grade of plastics material, preferably on the basis of a thermoplastic, a thermoplastic polyolefin being especially preferred.

8. Electrofusion tape (1) according to one of the preceding claims, **characterized in that** the heating element (3) is arranged form-fittingly in the jacket element (2).

9. Electrofusion tape (1) according to one of the preceding claims, **characterized in that** the electrofusion tape (1) has a wraparound guide or is configured as such and the heating element (3) is guided by the jacket element (2), wherein the heating element (3) is gripped around at least in part by the jacket element (2), wherein, with the wraparound guide, the heating element (3) is gripped around at the side and at the top and bottom by the jacket element (2).

10. Electrofusion tape (1) according to one of the preceding claims, **characterized in that** in the cross-section of the electrofusion tape (1) the width or diameter of a contact element (6) is less than or equal to the thickness (8) of the heating element (3) in the region of the contact face between contact element (6) and heating element.

11. Electrofusion tape (1) according to one of the preceding claims, **characterized in that** the jacket element (2) and the heating element (3) have a dovetail guide or a T-slot guide or take the form of a dovetail guide or T-slot guide.

12. Electrofusion tape (1) according to one of the preceding claims, **characterized in that** the heating element (3) has anchors (9) for connection with the jacket element (2).

13. Use of an electrofusion tape (1) according to one of Claims 1 to 12 in a fixed-point fastening (11) for a pipe, wherein the electrofusion tape (1) is preferably manufactured as endless tape and may be cut individually to length and is encompassed by a pipe clamp (10) of the fixed-point fastening (11) or the pipe clamp (10) is arranged axially offset relative to the electrofusion tape on the pipe and serves as an axial limit stop.

14. Method for producing an electrofusion tape (1) according to one of Claims 1 to 12, **characterized in that** the heating element (3) with the contact elements (6) arranged therein and the jacket element (2) are produced separately by extrusion and the heating element (3) and the jacket element (2) are fitted together after extrusion.

## Revendications

1. Bande de soudage électrique (1) pour souder avec des conduits en matière plastique, en particulier pour l'utilisation lors d'une fixation à point fixe, composée d'un élément d'enrobage (2) de préférence d'une matière plastique isolante de l'électricité, d'au moins un élément chauffant (3) d'une matière plastique électro-conductrice et d'au moins deux éléments de contact (6) pour alimenter l'élément chauffant (3) en énergie électrique, sachant que l'élément d'enrobage (2) et l'élément chauffant (3) sont constitués comme des bandes, sachant que l'élément d'enrobage (2) entoure l'élément chauffant (3) au moins en partie, sachant que les éléments de contact (6) sont disposés dans les zones de bordure s'opposant (4) de l'élément chauffant (3) et s'étendant parallèlement l'un par rapport à l'autre le long de l'élément chauffant (3), **caractérisée en ce que** l'élément chauffant (3) ne peut pas être déplacé latéralement et respectivement pas transversalement à la direction longitudinale de bande, sachant que l'élément chauffant (3) est disposé pouvant se déplacer exclusivement dans la direction longitudinale de bande (5) dans l'élément d'enrobage (2).

2. Bande de soudage électrique (1) selon la revendication 1, **caractérisée en ce que** la conductivité spécifique des éléments de contact (6) est plus élevée que la conductivité spécifique de l'élément chauffant (3), de préférence de 10 fois, de préférence en particulier de 100 fois plus élevée.

3. Bande de soudage électrique (1) selon la revendication 1, **caractérisée en ce que** l'élément chauffant (3) en matière plastique électro-conductrice comporte une résistance électrique spécifique de 0,1 - 100 (Ω x cm), de préférence de 0,1 - 10 (Ω x cm).

4. Bande de soudage électrique (1) selon la revendication 1 ou 2, **caractérisée en ce que** les éléments de contact (6) sont constitués en métal, de préférence de cuivre.

5. Bande de soudage électrique (1) selon la revendication 1 ou 2, **caractérisée en ce que** les éléments de contact (6) sont constitués de fibres de carbone sans fin ou d'un matériau composite synthétique électro-conducteur de matière plastique avec des nanotubes de carbone, du graphite, du graphène ou avec une substance de remplissage métallique.

6. Bande de soudage électrique (1) selon l'une quelconque des revendications précédentes, **caractérisée en ce que** les éléments de contact (6) sont constitués sous la forme de fil ou de treillis.

7. Bande de soudage électrique (1) selon l'une quelconque des revendications précédentes, **caractérisée en ce que** l'élément d'enrobage (2) et l'élément chauffant (3) sont fabriqués sur la base du même type de matière plastique, de préférence d'une matière thermoplastique, de préférence en particulier d'une polyoléfine thermoplastique.

8. Bande de soudage électrique (1) selon l'une quelconque des revendications précédentes, **caractérisée en ce que** l'élément chauffant (3) est disposé dans l'élément d'enrobage (2) par conformité de forme.

9. Bande de soudage électrique (1) selon l'une quelconque des revendications précédentes, **caractérisée en ce que** la bande de soudage électrique (1) comporte un guidage d'enserrage ou est constituée comme tel et l'élément chauffant (3) est guidé par l'élément d'enrobage (2), sachant que l'élément chauffant (3) est entouré au moins en partie par l'élément d'enrobage (2), sachant que pour le guidage d'enserrage, l'élément chauffant (3) est entouré latéralement ainsi que par le haut et le bas par l'élément d'enrobage (2).

10. Bande de soudage électrique (1) selon l'une quelconque des revendications précédentes, **caractérisée en ce que** dans la section de la bande de soudage électrique (1), la largeur ou le diamètre d'un élément de contact (6) est plus petit ou égal à l'épaisseur (8) de l'élément chauffant (3) dans la zone de la surface de contact entre l'élément de contact (6) et l'élément chauffant.

11. Bande de soudage électrique (1) selon l'une quelconque des revendications précédentes, **caractérisée en ce que** l'élément d'enrobage (2) et l'élément chauffant (3) comportent un guidage rainuré en queue d'aronde ou en T ou sont constitués comme un guidage rainuré en queue d'aronde ou en T.

12. Bande de soudage électrique (1) selon l'une quelconque des revendications précédentes, **caractérisée en ce que** l'élément chauffant (3) comporte un induit (9) pour la liaison avec l'élément d'enrobage (2).

13. Utilisation d'une bande de soudage électrique (1) selon l'une quelconque des revendications 1 à 12 dans une fixation à point fixe (11) pour un conduit, sachant que la bande de soudage électrique (1) est fabriquée de préférence sous la forme d'une bande continue et peut être mise à longueur de façon individuelle et est entourée par un collier de tube (10) de la fixation à point fixe (11) ou le collier de tube (10) est disposé sur le conduit axialement déporté par rapport à la bande de soudage électrique et sert à la délimitation axiale.

14. Procédé de fabrication d'une bande de soudage électrique (1) selon l'une quelconque des revendications 1 à 12, **caractérisé en ce que** l'élément chauffant (3) avec les éléments de contact (6) disposés dedans et l'élément d'enrobage (2) sont fabriqués séparément dans un procédé d'extrusion et l'élément chauffant (3) et l'élément d'enrobage (2) sont montés ensemble après l'extrusion.
